(19) Europäisches Patentamt / European Patent Office / Office européen des brevets

(11) **EP 4 125 005 B1**

(12) **EUROPÄISCHE PATENTSCHRIFT**

(45) Veröffentlichungstag und Bekanntmachung des Hinweises auf die Patenterteilung:
**25.06.2025   Patentblatt 2025/26**

(21) Anmeldenummer: **21187773.3**

(22) Anmeldetag: **26.07.2021**

(51) Internationale Patentklassifikation (IPC):
**G06N 3/0895** (2023.01)    **G06N 3/045** (2023.01)

(52) Gemeinsame Patentklassifikation (CPC):
**G06N 3/0895; G06N 3/045**

(54) **KONTRASTIVES REPRESENTATION LEARNING FÜR MESSDATEN**

KONTRASTIVES REPRESENTATION LEARNING FÜR MESSDATEN

APPRENTISSAGE CONTRASTIF DE LA REPRÉSENTATION POUR DES DONNÉES DE MESURES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.02.2023   Patentblatt 2023/05**

(73) Patentinhaber: **Robert Bosch GmbH**
**70442 Stuttgart (DE)**

(72) Erfinder:
• **Noroozi, Mehdi**
  **71229 Leonberg (DE)**
• **Hoffmann, David**
  **75181 Pforzheim Hohenwart (DE)**
• **Behrmann, Nadine**
  **70567 Stuttgart (DE)**

(56) Entgegenhaltungen:
• **WANG XINSHAO ET AL: "Ranked List Loss for Deep Metric Learning", 2019 IEEE/CVF CONFERENCE ON COMPUTER VISION AND PATTERN RECOGNITION (CVPR), IEEE, 15 June 2019 (2019-06-15), pages 5202 - 5211, XP033687448, DOI: 10.1109/CVPR.2019.00535**
• YUWEN XIONG ET AL: "LoCo: Local Contrastive Representation Learning", ARXIV.ORG, CORNELL UNIVERSITY LIBRARY, 201 OLIN LIBRARY CORNELL UNIVERSITY ITHACA, NY 14853, 29 November 2020 (2020-11-29), XP081825419
• FARZEEN MUNIR ET AL: "SSTN: Self-Supervised Domain Adaptation Thermal Object Detection for Autonomous Driving", ARXIV.ORG, CORNELL UNIVERSITY LIBRARY, 201 OLIN LIBRARY CORNELL UNIVERSITY ITHACA, NY 14853, 4 March 2021 (2021-03-04), XP081906005
• JELENA KOCI ET AL: "An End-to-End Deep Neural Network for Autonomous Driving Designed for Embedded Automotive Platforms", SENSORS, vol. 19, no. 9, 3 May 2019 (2019-05-03), pages 2064, XP055759335, DOI: 10.3390/s19092064

**Beschreibung**

Die vorliegende Erfindung betrifft das Training von Encodern, die Datensamples von Messdaten auf maschinell auswertbare Repräsentationen abbilden, welche für eine Vielzahl nachgeschalteter Aufgaben einsetzbar sind.

Stand der Technik

Für die Auswertung von Messdaten, wie beispielsweise Bilddaten, kommen insbesondere im Bereich des zumindest teilweise automatisierten Fahrens Verfahren des maschinellen Lernens zum Einsatz. So kann beispielsweise ein Bildklassifikator, der auf einem Satz Trainingsbilder mit hinreichender Variabilität trainiert wurde, auch bislang völlig ungesehene Bilder zutreffend in Klassen einer vorgegebenen Klassifikation einteilen. Insoweit wird hier die Fahrausbildung eines menschlichen Fahrschülers nachgebildet, die typischerweise weniger als 100 Stunden und weniger als 1000 km Fahrpraxis umfasst und den Fahrschüler dennoch in die Lage versetzt, auch völlig neue und in der Fahrausbildung nicht behandelte Situationen zu meistern. So sind etwa auch im Sommer ausgebildete Fahrer in der Lage, im Winter auf Schnee zu fahren.

Vielfach werden die Messdaten zunächst auf eine generische maschinell auswertbare Repräsentation abgebildet, bevor diese Repräsentation anschließend im Hinblick auf die gestellte Aufgabe ausgewertet wird. Ein Verfahren zum Erzeugen solcher Repräsentationen ist beispielsweise aus der EP 3 575 986 A1 bekannt.

Das Ziel von Deep Metric Learning (DML) ist es, Einbettungen zu lernen, die semantische Ähnlichkeitsinformationen zwischen Datenpunkten erfassen können. Bestehende paarweise oder dreifache Verlustfunktionen, die in DML verwendet werden, leiden unter langsamer Konvergenz aufgrund eines großen Anteils trivialer Paare oder Triplets, wenn sich das Modell verbessert. Um dies zu verbessern, werden strukturierte Verlustfunktionen vorgeschlagen, die mehrere Beispiele einbeziehen und die strukturierten Informationen zwischen ihnen ausnutzen. WANG XINSHAO ET AL: "Ranked List Loss for Deep Metric Learning", 2019 IEEE/CVF CONFERENCE ON COMPUTER VISION AND PATTERN RECOGNITION (CVPR), IEEE, schlagen für DML ranglistenmotivierte strukturierte Verluste sowie einen Verlust in Form einer Rangliste vor.

Offenbarung der Erfindung

Im Rahmen der Erfindung wurde ein Verfahren zum Trainieren eines Encoders, der Datensamples x von Messdaten auf maschinell auswertbare Repräsentationen z abbildet, entwickelt. Die Messdaten sind Bilder. Hierbei können die Bilder mit beliebigen Abbildungsmodalitäten und Kontrastmechanismen aufgenommen worden sein. Neben mit sichtbarem Licht aufgenommenen Bildern können beispielsweise auch Wärmebilder, Ultraschallbilder, Radarbilder oder Lidar-Bilder genutzt werden.

Im Rahmen des Verfahrens wird eine Menge X von Trainings-Samples x bereitgestellt, wobei im Kontext einer vorgegebenen Anwendung eine Relation definiert ist, in welchem Grade zwei Samples $x_1$ und $x_2$ zueinander ähnlich sind. So können beispielsweise Bilder verschiedene Objekte beinhalten, zwischen denen es wiederum eine semantische Relation dahingehend gibt, welche Objekte in welchem Grade zueinander ähnlich sind.

Es wird eine mit trainierbaren Parametern $\theta$ parametrisierte Funktion $f_\theta(x)$ bereitgestellt, die Samples x auf Repräsentationen z abbildet. Diese Funktion $f_\theta(x)$ soll durch das Training in die Lage versetzt werden, im späteren Wirkbetrieb Repräsentationen z von beliebigen Samples x zu erzeugen. Dabei soll eine Ähnlichkeitsrelation zwischen Samples $x_1$ und $x_2$ dahingehend erhalten bleiben, dass zueinander ähnliche Samples $x_1$ und $x_2$ auf Repräsentationen $z_1$ und $z_2$ abgebildet werden, die im Raum der Repräsentationen nahe beieinander liegen.

Nicht zueinander ähnliche Samples $x_1$ und $x_2$ sollen hingegen auf Repräsentationen $z_1$ und $z_2$ abgebildet werden, die im Raum der Repräsentationen weiter voneinander entfernt sind.

Es wird ein Ähnlichkeitsmaß $h(x_1, x_2)$ bereitgestellt, das Samples $x_1$ und $x_2$ eine Ähnlichkeit von Repräsentationen $f_\theta(x_1)$ und $f_\theta(x_2)$, und/oder von Verarbeitungsprodukten dieser Repräsentationen $f_\theta(x_1)$ und $f_\theta(x_2)$, zuordnet. Das heißt, die Samples $x_1$ und $x_2$ werden von $h(x_1, x_2)$ auf einen Zahlenwert abgebildet, der ein Maß für die Ähnlichkeit ist.

Aus der Menge X der Trainings-Samples x wird nun mindestens ein Anfrage-Sample q gezogen. Zu diesem Anfrage-Sample q werden

- eine in einer Rangfolge geordnete Menge P von zum Anfrage-Sample q ähnlichen Positiv-Samples p aus der Menge X sowie
- eine Menge N von zum Anfrage-Sample q nicht mehr ähnlichen Negativ-Samples n aus der Menge X ermittelt.

Diese Positiv-Samples p und Negativ-Samples n können aus einer beliebigen Quelle stammen. Beispielsweise können Samples x zufällig aus der Menge X gezogen und anschließend in Positiv-Samples p und Negativ-Samples n eingeteilt werden. Alternativ oder auch in Kombination hierzu kann beispielsweise aus dem Anfrage-Sample q, und/oder aus einem bereits vorhandenen Positiv-Sample p, durch die Anwendung mindestens eines Verarbeitungsschritts, der den semantischen Inhalt dieses Samples nicht ändert, ein neues Positiv-Sample p' erzeugt werden.

Beispielsweise können aus Bildern Ausschnitte ausgewählt und anschließend auf die ursprüngliche Bildgröße zurückvergrößert werden. Bilder können auch beispielsweise an einer Achse gespiegelt werden. Die Helligkeit, der Kontrast und die Sättigung von Bildern können anhand von Parametern, die aus einer Zufallsverteilung gezogen werden, angepasst werden. Bilder können auch beispielsweise mit einer vorgegebenen Wahrscheinlichkeit von Farbe in Graustufen umgewandelt werden. All diese Veränderungen ändern nichts am semantischen Inhalt des Bildes.

Mindestens die Parameter $\theta$ werden optimiert mit dem Ziel, dass die Ähnlichkeitsmaße h(q, p) entsprechend der Rangfolge der Positiv-Samples p $\in$ P geordnet sind und größer sind als h(q, n) für alle n $\in$ N.

Es wurde erkannt, dass die Berücksichtigung einer Rangfolge unter Positiv-Samples p eine wesentlich feinkörnigere Berücksichtigung von Vorwissen ermöglicht, das über die Trainings-Samples x bekannt ist. Damit kann ein größerer Anteil derartigen Vorwissens gewinnbringend genutzt werden.

Als Beispiel sei eine Menge X von Bildern als Trainings-Samples x erwähnt, die verschiedene Objekte zeigen. Wenn das Abfrage-Sample q einen Hund zeigt, dann sind ein Hai, ein Grashüpfer und ein Schulbus als weitere Samples hierzu offensichtlich nicht ähnlich, so dass es sich hierbei um Negativ-Samples n handelt. Wenn ein weiteres Sample einen Hund der gleichen Rasse wie im Abfrage-Sample q zeigt, sind sich diese beiden Hunde sehr ähnlich, so dass es sich bei diesem Sample um ein Positiv-Sample p handelt. Samples mit Hunden anderer Rassen sind dem Abfrage-Sample q zwar noch ähnlich, weil sie ebenfalls Hunde zeigen, jedoch ist diese Ähnlichkeit geringer ausgeprägt als bei einem Sample mit einem Hund der gleichen Rasse wie im Abfrage-Sample q. Genau diese Unterscheidung lässt sich mit dem Verfahren berücksichtigen.

Beim herkömmlichen kontrastiven Lernen gab es als Kategorien nur "Positiv-Samples p" und "Negativ-Samples n". Dies ist bei dem besagten feiner abgestuften Vorwissen über die Trainings-Samples x ein Stück weit damit vergleichbar, dass ein amtliches Formular in einem Aspekt nur das Ankreuzen einer von wenigen Alternativen zulässt, von denen jedoch keine wirklich auf das eigene Anliegen passt.

In einer besonders vorteilhaften Ausgestaltung wird als Hilfsmittel für die Bewertung von Repräsentationen z zusätzlich eine mit trainierbaren Parametern $\lambda$ parametrisierte Funktion $g_\lambda(z)$ bereitgestellt, die Repräsentationen z in einen Arbeitsraum überführt. In einem derartigen Arbeitsraum kann die Ähnlichkeit von Repräsentationen einfacher messbar sein als direkt im Raum der Repräsentationen z. Es werden dann Darstellungen $g_\lambda(f_\theta(x_1))$ und $g_\lambda(f_\theta(x_2))$ im Arbeitsraum als Verarbeitungsprodukte der Repräsentationen $f_\theta(x_1)$ und $f_\theta(x_2)$ gebildet. Die Ähnlichkeit dieser Darstellungen $g_\lambda(f_\theta(x_1))$ und $g_\lambda(f_\theta(x_2))$ mit dem Ähnlichkeitsmaß $h(x_1, x_2)$ bewertet. Weiterhin werden zusätzlich zu den Parametern $\theta$ auch die Parameter $\lambda$ optimiert. Die Funktion $g_\lambda(z)$ wird also beim Training von $f_\theta(x)$ mittrainiert, ist aber nach Abschluss des Trainings nicht Teil des finalen Encoders für die Erzeugung von Repräsentationen z aus beliebigen Samples x.

Die Menge P der Positiv-Samples p umfasst Teilmengen $P_1, ..., P_r$ von Positiv-Samples $p_1, ..., p_r$ für Rangstufen $1, ..., r$ in der Rangfolge. Diese Teilmengen $P_1, ..., P_r$ können dann bei der Prüfung der Frage, inwieweit konkrete Werte für die Parameter $\theta$ und $\lambda$ gut oder schlecht sind (etwa im Rahmen einer Kostenfunktion), getrennt voneinander behandelt werden.

Es wird eine über die Ähnlichkeitsmaße h(q, p) und h(q, n) von den Parametern $\theta$ und gegebenenfalls auch $\lambda$ abhängige Kostenfunktion L aufgestellt, die eine Summe von Beiträgen $L_i$ für die Rangstufen $1, ..., r$ in der Rangfolge ist. Die Parameter $\theta$ und gegebenenfalls auch $\lambda$ können dann auf das Ziel optimiert werden, diese Kostenfunktion L zu minimieren. Auf dies Weise kann das ursprüngliche als Ungleichung

$$h(q, p_1) > \cdots > h(q, p_r) > h(q, n)$$

formulierte Optimierungsziel in eine Optimierungsaufgabe umgewandelt werden, bei der ein Feedback in der üblichen Weise über die Rückpropagation von Gradienten in eine Aktualisierung der Parameter $\theta$ und $\lambda$ zurückgespielt werden kann.

Für jede Rangstufe $i=1, ..., r$ wird eine InfoNCE-Kostenfunktion als Beitrag $L_i$ zur Kostenfunktion L gewertet. InfoNCE bedeutet hier insbesondere eine Unterscheidung zwischen Information und Rauschen über eine kontrastive Schätzung ("information-noise constrastive estimation"). In dieser InfoNCE-Kostenfunktion

- werden die Positiv-Samples $p_i \in P_i$ der jeweiligen Rangstufe i als Positiv-Samples gewertet,
- bleiben die Positiv-Samples $p_j \in P_j$ für Rangstufen $j < i$ unberücksichtigt und
- werden die Positiv-Samples $p_j \in P_j$ für Rangstufen $j > i$ als Negativ-Samples gewertet.

Ein Beispiel für eine derartige InfoNCE-Kostenfunktion $L_i$ ist

$$L_{i,in} = -\log \frac{\sum_{p \epsilon P_i} \exp(h(q,p)/\tau_i)}{\sum_{p \epsilon \cup_{j \geq i} P_j} \exp(h(q,p)/\tau_i) + \sum_{n \epsilon N} \exp(h(q,n)/\tau_i)},$$

worin $\tau_i$ ein Temperaturparameter ist.

Allgemein kann die InfoNCE-Kostenfunktion für mindestens eine Rangstufe i einen Logarithmus einer Summe von Beiträgen enthalten, die auf die Positiv-Samples $p_i \in P_i$ dieser Rangstufe i zurückgehen. Dies ist in dem obigen Ausdruck im Zähler der Fall.

Die InfoNCE-Kostenfunktion kann aber auch beispielsweise für mindestens eine Rangstufe i eine Summe von Beiträgen enthalten, die auf die Positiv-Samples $p_i \in P_i$ dieser Rangstufe i zurückgehen. Dies ist beispielsweise dann der Fall, wenn in dem obigen Ausdruck die Summe über $p \in P_i$ aus dem Logarithmus herausgezogen wird:

$$L_{i,out} = -\sum_{p \epsilon P_i} \log \frac{\exp(h(q,p)/\tau_i)}{\sum_{p \epsilon \cup_{j \geq i} P_j} \exp(h(q,p)/\tau_i) + \sum_{n \epsilon N} \exp(h(q,n)/\tau_i)}.$$

Der Unterschied zwischen diesen beispielhaften Kostenfunktionen $L_{i,in}$ und $L_{i,out}$ liegt darin, dass $L_{i,in}$ resistenter gegen Rauschen in den Positiv-Samples $p_i$ ist. Dieses Rauschen ist für Positiv-Samples $p_1$ der ersten Rangstufe voraussichtlich geringer als für Positiv-Samples $p_i$ weiterer Rangstufen i=2, ..., r. Daher kann die Gesamt-Kostenfunktion L auch beispielsweise eine Mischung aus Kostenfunktionen $L_{i,in}$ und $L_{i,out}$ für verschiedene Rangstufen i beinhalten, wie etwa

$$L = L_{1,out} + \sum_{i=2} L_{i,in}.$$

Eine wichtige Nutzanwendung des Encoders $f_\theta(x)$ ist die Klassifikation von Bildern. Hierbei wird mindestens ein Abfrage-Datensample x' mit der trainierten parametrisierten Funktion $f_\theta(x)$ auf eine Repräsentation z' abgebildet. Diese Repräsentation z' wird einem Klassifikatornetzwerk K zugeführt. Daraufhin werden von dem Klassifikatornetzwerk K ein oder mehrere Klassifikations-Scores für die Zuordnung des Abfrage-Datensamples x' zu einer oder mehreren Klassen einer vorgegebenen Klassifikation ermittelt. Hierbei kann beispielsweise das Klassifikatornetzwerk K gleichzeitig mit dem Encoder $f_\theta(x)$ trainiert werden. Es kann aber auch beispielsweise ausgehend von einem bereits vortrainierten und in seiner Konfiguration festgehaltenen Encoder $f_\theta(x)$ lediglich das Klassifikatornetzwerk K trainiert werden. Auch ein Weitertraining des vortrainierten Encoders $f_\theta(x)$ in begrenztem Umfang ist möglich. Unabhängig davon, welche Variante gewählt wird, führt das zuvor beschriebene Training des Encoders $f_\theta(x)$ zu einer deutlichen Steigerung der auf nicht beim Training verwendeten Test- bzw. Validierungsdaten gemessenen Klassifikationsgenauigkeit.

Diese bessere Klassifikationsgenauigkeit lässt sich unmittelbar in eine bessere Leistung in technischen Anwendungen ummünzen, die auf die Klassifikation zurückgreifen. Es wird aus dem oder den Klassifikations-Scores ein Ansteuersignal gebildet. Ein Fahrzeug, und/oder ein System für die Qualitätskontrolle von in Serie gefertigten Produkten, und/oder ein System für die Überwachung von Bereichen, wird mit diesem Ansteuersignal angesteuert. Der Betrieb der genannten Systeme ist besonders stark auf eine zuverlässige Klassifikation der eingegebenen Daten angewiesen. Die diesbezügliche Steigerung der Genauigkeit hat also die Wirkung, dass die Systeme in einer größeren Anzahl von Situationen eine der jeweiligen, messtechnisch in Form der Messdaten erfassten, Situation angemessene Reaktion vollführen.

Das zuvor beschriebene Training ermöglicht es auch, mit Hilfe der parametrisierten Funktion $f_\theta(x)$ zu unterscheiden, ob ein beliebiges Datensample x' der durch die Menge X von Trainings-Samples x definierten Verteilung angehört. Diese Untersuchung ist wichtig, um zu beurteilen, ob ein System, das den Encoder $f_\theta(x)$ nutzt, noch innerhalb des Spektrums an Eingabedaten arbeitet, für das dieses System (und hier insbesondere der Encoder $f_\theta(x)$) trainiert wurde. Wenn beispielsweise einem Bildklassifikator für Verkehrszeichen, der den Encoder $f_\theta(x)$ nutzt, ein nach dem Training neu eingeführtes Verkehrszeichen vorgelegt wird, kann auf diese Weise erkannt werden, dass das Training dieses neu eingeführte Verkehrszeichen nicht abdeckt.

So wurde beispielsweise das Verkehrszeichen "Umweltzone" dem Verkehrszeichen "Tempo 30-Zone" entlehnt, indem einfach die 30 im Inneren gegen das Wort "Umwelt" ausgetauscht wurde. Wenn die Ausgabe des Bildklassifikators unbesehen weiterverarbeitet würde, könnte dies dazu führen, dass das Verkehrszeichen fälschlicherweise als "Tempo 30-Zone" erkannt wird und etwa ein automatisiert fahrendes Fahrzeug auf einer innerstädtischen Schnellstraße, auf der 80 km/h erlaubt sind, plötzlich auf 30 km/h abbremst. Wird hingegen erkannt, dass das Verkehrszeichen nicht in die ursprünglich trainierte Verteilung von Verkehrszeichen hineinpasst, können derartige Überraschungen vermieden werden.

Daher werden in einer vorteilhaften Ausgestaltung Datensamples x aus einer Menge R, die verschiedenen Klassen einer vorgegebenen Klassifikation angehören, mit der trainierten parametrisierten Funktion $f_\theta(x)$ auf Repräsentationen z abgebildet. Für jede dieser Klassen wird eine Verteilung $\phi$ der aus Datensamples x dieser Klasse erzeugten Repräsentationen z ermittelt. Es wird nun mindestens ein Abfrage-Datensample x' mit der trainierten parametrisierten Funktion $f_\theta(x)$ auf eine Repräsentation z' abgebildet.

Anhand der besagten Verteilungen werden jeweils Wahrscheinlichkeiten dafür ermittelt, dass die Repräsentation z' dieser Verteilung angehört. Aus diesen Wahrscheinlichkeiten wird wiederum ausgewertet, inwieweit das Abfrage-Datensample x' der durch die Menge X von Trainings-Samples x definierten Verteilung V angehört.

Das Verfahren ist computerimplementiert. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger. Weiterhin kann ein Computer mit dem Computerprogramm und/oder maschinenlesbaren Datenträger ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

Ausführungsbeispiele

Es zeigt:

Figur 1 Ausführungsbeispiel des Verfahrens 100 zum Trainieren eines Encoders $f_\theta(x)$;

Figur 2 Veranschaulichung der Problemstellung an einem Beispiel mit Bildern als Datensamples x;

Figur 3 Genauigkeits-Recall-Kurve beim Retrieval von Bildern unter Nutzung von Encodern $f_\theta(x)$, die auf verschiedene Weise trainiert wurden.

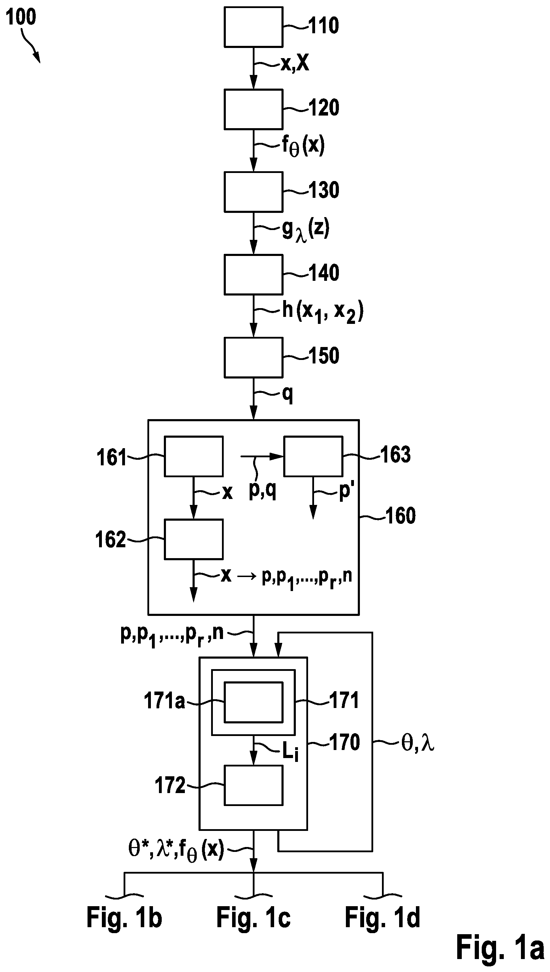

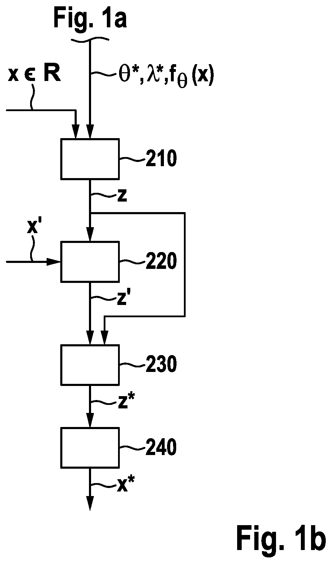

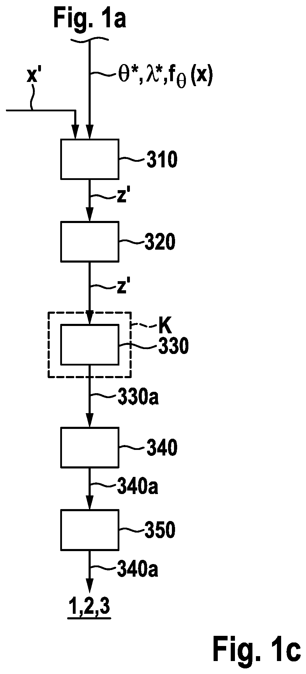

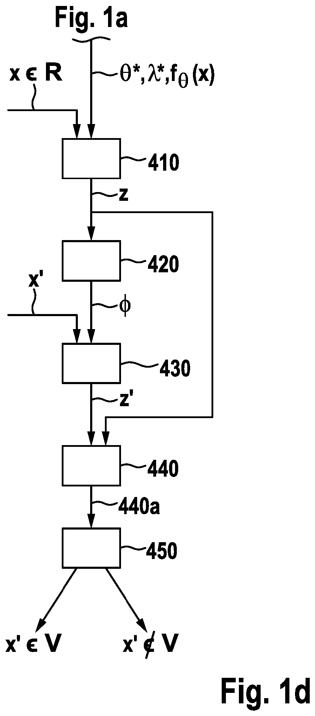

Figur 1 ist ein schematisches Ablaufdiagramm eines Ausführungsbeispiels des Verfahrens 100 zum Trainieren eines Encoders $f_\theta(x)$.

Figur 1a zeigt die Verfahrensschritte bis zum Erhalt eines trainierten Encoders $f_\theta(x)$.

In Schritt 110 wird eine Menge X von Trainings-Samples x bereitgestellt, wobei im Kontext einer vorgegebenen Anwendung eine Relation definiert ist, in welchem Grade zwei Samples $x_1$ und $x_2$ zueinander ähnlich sind.

In Schritt 120 wird eine mit trainierbaren Parametern $\theta$ parametrisierte Funktion $f_\theta(x)$ bereitgestellt, die Samples x auf Repräsentationen z abbildet.

In Schritt 130 wird eine mit trainierbaren Parametern $\lambda$ parametrisierte Funktion $g_\lambda(z)$ bereitgestellt, die Repräsentationen z in einen Arbeitsraum überführt.

In Schritt 140 wird ein Ähnlichkeitsmaß $h(x_1, x_2)$ bereitgestellt, das Samples $x_1$ und $x_2$ eine Ähnlichkeit der Darstellungen $g_\lambda(f_\theta(x_1))$ und $g_\lambda(f_\theta(x_2))$ im Arbeitsraum zuordnet.

In Schritt 150 wird aus der Menge X der Trainings-Samples x mindestens ein Anfrage-Sample q gezogen.

In Schritt 160 werden zu diesem Anfrage-Sample q eine in einer Rangfolge geordnete Menge P von zum Anfrage-Sample q ähnlichen Positiv-Samples p aus der Menge X, sowie eine Menge N von zum Anfrage-Sample q nicht mehr ähnlichen Negativ-Samples n aus der Menge X, ermittelt.

Gemäß Block 161 können Samples x zufällig aus der Menge X gezogen werden.

Gemäß Block 162 können diese Samples x dann in Positiv-Samples p, $p_1$, ..., $p_r$, sowie Negativ-Samples n eingeteilt werden.

Gemäß Block 163 kann aus dem Anfrage-Sample q, und/oder aus einem bereits vorhandenen Positiv-Sample p, durch die Anwendung mindestens eines Verarbeitungsschritts, der den semantischen Inhalt dieses Samples nicht ändert, ein neues Positiv-Sample p' erzeugt werden.

In Schritt 170 werden die Parameter $\theta$ der Funktion $f_\theta(x)$ sowie die Parameter $\lambda$ der Funktion $g_\lambda(z)$ optimiert mit dem Ziel, dass die Ähnlichkeitsmaße $h(q, p)$ entsprechend der Rangfolge der Positiv-Samples $p \in P$ geordnet sind und größer sind als $h(q, n)$ für alle $n \in N$.

Gemäß Block 171 kann eine über die Ähnlichkeitsmaße $h(q, p)$ und $h(q, n)$ von den Parametern $\theta$ und $\lambda$ abhängige Kostenfunktion L aufgestellt werden, die eine Summe von Beiträgen $L_i$ für die Rangstufen 1, ..., r in der Rangfolge ist. Hierbei wird gemäß Block 171a für jede Rangstufe i=1, ..., r eine InfoNCE-Kostenfunktion, in der

- die Positiv-Samples $p_i \in P_i$ der jeweiligen Rangstufe i als Positiv-Samples gewertet werden,

- die Positiv-Samples $p_j \in P_j$ für Rangstufen $j < i$ unberücksichtigt bleiben und
- die Positiv-Samples $p_j \in P_j$ für Rangstufen $j > i$ als Negativ-Samples gewertet werden,

als Beitrag $L_i$ zur Kostenfunktion L gewählt.

Gemäß Block 172 können dann die Parameter $\theta$ und $\lambda$ auf das Ziel optimiert werden, die aus den Beiträgen $L_i$ zusammengesetzte Kostenfunktion L zu minimieren.

Die fertig trainierten Zustände der Parameter $\theta$ und $\lambda$ sind mit den Bezugszeichen $\theta^*$ bzw. $\lambda^*$ bezeichnet. Hiervon werden für weitere Anwendungen nur die Parameter $\theta^*$ benötigt, die das Verhalten der Funktion $f_\theta(x)$ charakterisieren.

Die Figuren 1b bis 1d zeigen beispielhafte Anwendungen des trainierten Encoders $f_\theta(x)$.

Figur 1b bezieht sich auf die Anwendung des Retrievals, bei der ein zu einem gegebenen Datensample x ähnliches Datensample x* gesucht wird.

In Schritt 210 werden Datensamples x aus einer Menge R mit der trainierten parametrisierten Funktion $f_\theta(x)$ auf Repräsentationen z abgebildet.

In Schritt 220 wird mindestens ein Abfrage-Datensample x' ebenfalls mit der trainierten parametrisierten Funktion $f_\theta(x)$ auf eine Repräsentation z' abgebildet.

In Schritt 230 wird eine im Raum der Repräsentationen am nächsten zu dieser Repräsentation z' gelegene zuvor erzeugte Repräsentation z* ermittelt.

In Schritt 240 wird das Datensample x, zu dem diese Repräsentation z* gehört, als ein gesuchtes zu dem Abfrage-Datensample x' ähnliches Datensample x* ermittelt.

Figur 1c bezieht sich auf die Anwendung der Klassifikation, bei der ein Abfrage-Datensample x' einer oder mehreren Klassen einer vorgegebenen Klassifikation zugeordnet werden soll.

In Schritt 310 wird mindestens ein Abfrage-Datensample x' mit der trainierten parametrisierten Funktion $f_\theta(x)$ auf eine Repräsentation z' abgebildet.

In Schritt 320 wird diese Repräsentation z' einem Klassifikatornetzwerk K zugeführt.

In Schritt 330 werden von dem Klassifikatornetzwerk K ein oder mehrere Klassifikations-Scores 330a für die Zuordnung des Abfrage-Datensamples x' zu einer oder mehreren Klassen einer vorgegebenen Klassifikation ermittelt.

In Schritt 340 wird aus dem oder den Klassifikations-Scores (330a) ein Ansteuersignal 340a gebildet.

In Schritt 350 wird ein Fahrzeug 1, und/oder ein System 2 für die Qualitätskontrolle von in Serie gefertigten Produkten, und/oder ein System 3 für die Überwachung von Bereichen, mit diesem Ansteuersignal 340a angesteuert.

Figur 1d bezieht sich auf die Erkennung, ob eine Abfrage-Datensample x' einer durch die Menge X von Trainings-Samples x definierten Verteilung V angehört ("in-distribution") oder nicht ("out-of-distribution", OOD).

In Schritt 410 werden Datensamples x aus einer Menge R, die verschiedenen Klassen einer vorgegebenen Klassifikation angehören, mit der trainierten parametrisierten Funktion $f_\theta(x)$ auf Repräsentationen z abgebildet.

In Schritt 420 wird für jede dieser Klassen eine Verteilung $\phi$ der aus Datensamples x dieser Klasse erzeugten Repräsentationen z ermittelt.

In Schritt 430 wird mindestens ein Abfrage-Datensample x' mit der trainierten parametrisierten Funktion $f_\theta(x)$ auf eine Repräsentation z' abgebildet.

In Schritt 440 werden anhand der Verteilungen $\phi$ jeweils Wahrscheinlichkeiten 440a dafür ermittelt, dass die Repräsentation z' dieser Verteilung $\phi$ angehört.

In Schritt 450 wird aus diesen Wahrscheinlichkeiten 440a ausgewertet, inwieweit das Abfrage-Datensample x' der durch die Menge X von Trainings-Samples x definierten Verteilung V angehört ($x' \in V$) oder nicht ($x' \notin V$).

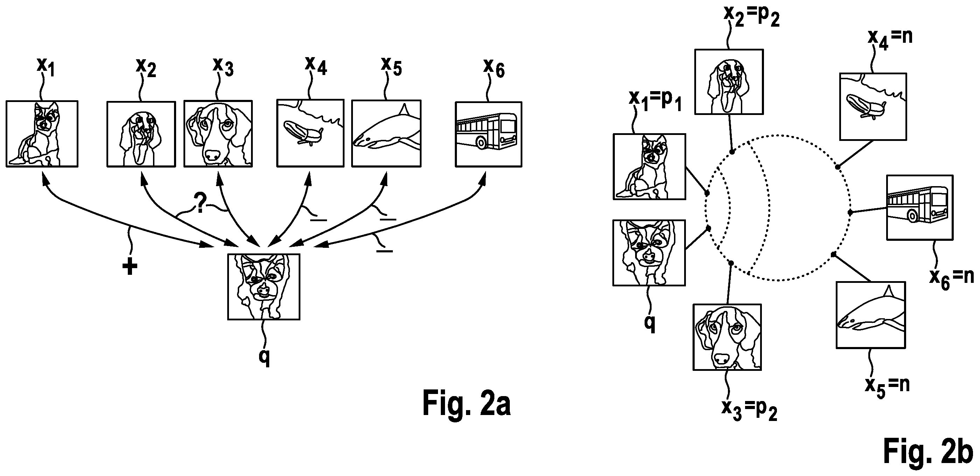

Figur 2 veranschaulicht die mit dem vorliegenden Verfahren 100 gelöste Problemstellung anhand von Bildern, die verschiedene Objekte zeigen.

In der in Figur 2a gezeigten Situation zeigt das Anfrage-Sample q einen Hund einer bestimmten Rasse. Ausgehend hiervon ist sofort klar, dass das Sample $x_1$, das einen anderen Hund der gleichen Rasse zeigt, ähnlich zum Abfrage-Sample q ist und somit als Positivbeispiel (+) zu werten ist. Ebenfalls ist klar, dass

- das Sample $x_4$, das einen Grashüpfer zeigt,
- das Sample $x_5$, das einen Hai zeigt, und
- das Sample $x_6$, das einen Schulbus zeigt,

keinerlei Ähnlichkeit mit einem Hund haben und somit als Negativbeispiele (-) zu werten sind.

Weniger klar ist die Lage bezüglich der Samples $x_2$ und $x_3$. Diese Samples zeigen zwar ebenfalls Hunde, doch sind diese Hunde erkennbar von einer ganz anderen Rasse als der Hund im Abfrage-Sample q. Hier passt weder die Einteilung als klares Positivbeispiel noch die Einteilung als klares Negativbeispiel.

Figur 2b zeigt, wie mit dem oben dargestellten Verfahren 100 das Problem gelöst wird. Die Samples $x_4$, $x_5$ und $x_6$ werden als Negativ-Samples n gewertet. Für die Positiv-Samples p werden mehrere Rangstufen eingeführt. Das zum Abfrage-Sample q ähnlichste Sample $x_1$ werden als Positiv-Sample $p_1$ ersten Ranges gewertet. Die Samples $x_2$ und $x_3$ mit

Hunden anderer Rassen werden als Positiv-Samples $p_2$ zweiten Ranges gewertet.

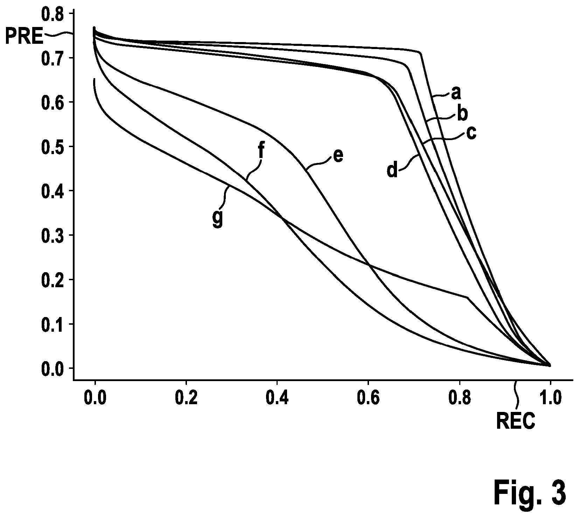

Figur 3 zeigt beispielhaft, wie sich die Präzision (PRE) bei einer Retrieval-Aufgabe an dem öffentlichen CIFAR100-Datensatz mit dem Recall (REC) ändert. Der Recall ist im weitesten Sinne das Verhältnis aus:

- der Schnittmenge zwischen den korrekt ausgewählten Samples und den insgesamt gezogenen Samples und
- allen möglichen Samples.

Die Kurven a bis g wurden jeweils für identisch durchgeführte Experimente erhalten, wobei lediglich die Art und Weise geändert wurde, auf die die Funktion $f_\theta(x)$ trainiert wurde. Je höher die Kurve verläuft, als desto besser erweist sich die "Schule", durch die $f_\theta(x)$ gegangen ist, für die Aufgabe des Retrieval.

Kurve a wurde erhalten, nachdem $f_\theta(x)$ mit dem zuvor beschriebenen Verfahren 100 trainiert wurde, wobei die Kostenfunktion L aus Beiträgen $L_{i,out}$ zusammengesetzt wurde.

Kurve b wurde erhalten, nachdem $f_\theta(x)$ mit dem zuvor beschriebenen Verfahren 100 trainiert wurde, wobei die Kostenfunktion L als Mischung aus Beiträgen $L_{i,out}$ und $L_{i,in}$ zusammengesetzt wurde. Für bestimmte Rangstufen i wurden also Beiträge $L_{i,out}$ verwendet, und für andere Rangstufen i wurden Beiträge $L_{i,in}$ verwendet.

Kurve c wurde erhalten, nachdem $f_\theta(x)$ mit einer herkömmlichen Kreuzentropie-Kostenfunktion trainiert wurde.

Kurve d wurde erhalten, nachdem $f_\theta(x)$ mit dem zuvor beschriebenen Verfahren 100 trainiert wurde, aber die Kostenfunktion L aus Beiträgen $L_{i,in}$ zusammengesetzt wurde.

Die Kurven e, f und g wurden erhalten, nachdem $f_\theta(x)$ mit überwachtem kontrastivem Lernen trainiert wurde. Für Kurve e wurden Beiträge aller Positiv-Samples p summiert, wobei im Unterschied zum hier vorgestellten Verfahren keine Rangstufen eingeführt wurden. Für Kurve f wurden Logarithmen der Beiträge summiert. Für Kurve g wurde $f_\theta(x)$ mit den 20 Superklassen des CIFAR-100-Datensatzes, statt mit den normalen 100 Klassen, trainiert.

**Patentansprüche**

1. Computerimplementiertes Verfahren (100) zum Trainieren eines Encoders, wobei es sich bei dem Encoder um eine parametrisierte Funktion, $f_\theta(x)$, handelt, welche Datensamples x von Messdaten auf maschinell auswertbare Repräsentationen z abbildet,

   wobei die Messdaten Bilder sind,
   wobei die trainierte parametrisierte Funktion $f_\theta(x)$ dazu eingerichtet ist,
   mindestens ein Abfrage-Datensample x' auf eine Repräsentation z' abzubilden und wobei diese Repräsentation z' einem Klassifikatornetzwerk K zugeführt wird (320), und wobei daraufhin von dem Klassifikatornetzwerk K ein oder mehrere Klassifikations-Scores (330a) für die Zuordnung des Abfrage-Datensamples x' zu einer oder mehreren Klassen einer vorgegebenen Klassifikation ermittelt werden (330),
   wobei aus dem oder den Klassifikations-Scores (330a) ein Ansteuersignal (340a) gebildet wird (340), und wobei ein Fahrzeug (1), und/oder ein System (2) für die Qualitätskontrolle von in Serie gefertigten Produkten, und/oder ein System (3) für die Überwachung von Bereichen, mit diesem Ansteuersignal (340a) angesteuert wird (350),
   wobei das Verfahren zum Trainieren des Encoders die folgenden Schritte aufweist:

   - es wird eine Menge X von Trainings-Samples x bereitgestellt (110), wobei im Kontext einer vorgegebenen Anwendung eine Relation definiert ist, in welchem Grade zwei Samples $x_1$ und $x_2$ zueinander ähnlich sind;
   - es wird die mit trainierbaren Parametern $\theta$ parametrisierte Funktion $f_\theta(x)$ bereitgestellt (120), die Samples x auf Repräsentationen z abbildet;
   - es wird ein Ähnlichkeitsmaß $h(x_1, x_2)$ bereitgestellt (140), das Samples $x_1$ und $x_2$ eine Ähnlichkeit von Repräsentationen $f_\theta(x_1)$ und $f_\theta(x_2)$, und/oder von Verarbeitungsprodukten dieser Repräsentationen $f_\theta(x_1)$ und $f_\theta(x_2)$, zuordnet;
   - aus der Menge X der Trainings-Samples x wird mindestens ein Anfrage-Sample q gezogen (150);
   - zu diesem Anfrage-Sample q werden

     ○ eine in einer Rangfolge geordnete Menge P von zum Anfrage-Sample q ähnlichen Positiv-Samples p aus der Menge X, wobei die Menge P Teilmengen $P_1$, ..., $P_r$ von Positiv-Samples $p_1$, ..., $p_r$ für Rangstufen 1, ..., r in der Rangfolge umfasst, sowie
     ○ eine Menge N von zum Anfrage-Sample q nicht mehr ähnlichen Negativ-Samples n aus der Menge X ermittelt (160);

   - mindestens die Parameter $\theta$ werden optimiert (170) mit dem Ziel, dass die Ähnlichkeitsmaße h(q, p) entsprechend der Rangfolge der Positiv-Samples $p \in P$ geordnet sind und größer sind als $h(q, n)$ für alle $n \in N$, wobei

- eine über die Ähnlichkeitsmaße $h(q, p)$ und $h(q, n)$ von den Parametern $\theta$ und gegebenenfalls auch $\lambda$ abhängige Kostenfunktion L aufgestellt wird (171), die eine Summe von Beiträgen $L_i$ für die Rangstufen 1, ..., r in der Rangfolge ist; und
- die Parameter $\theta$ sowie gegebenenfalls auch $\lambda$ auf das Ziel optimiert werden (172), diese Kostenfunktion L zu minimieren,

wobei für jede Rangstufe i=1, ..., r eine InfoNCE-Kostenfunktion, in der

- die Positiv-Samples $p_i \in P_i$ der jeweiligen Rangstufe i als Positiv-Samples gewertet werden,
- die Positiv-Samples $p_j \in P_j$ für Rangstufen j < i unberücksichtigt bleiben und
- die Positiv-Samples $p_j \in P_j$ für Rangstufen j > i als Negativ-Samples gewertet werden,

als Beitrag $L_i$ zur Kostenfunktion L gewählt wird (171a).

2. Verfahren nach Anspruch 1, wobei

- zusätzlich eine mit trainierbaren Parametern $\lambda$ parametrisierte Funktion $g_\lambda(z)$, die Repräsentationen z in einen Arbeitsraum überführt, bereitgestellt wird (130);
- Darstellungen $g_\lambda(f_\theta(x_1))$ und $g_\lambda(f_\theta(x_2))$ im Arbeitsraum als Verarbeitungsprodukte der Repräsentationen $f_\theta(x_1)$ und $f_\theta(x_2)$ gebildet werden (141);
- die Ähnlichkeit dieser Darstellungen $g_\lambda(f_\theta(x_1))$ und $g_\lambda(f_\theta(x_2))$ mit dem Ähnlichkeitsmaß $h(x_1, x_2)$ bewertet wird (142); und
- zusätzlich zu den Parametern $\theta$ auch die Parameter $\lambda$ optimiert werden (173).

3. Verfahren (100) nach Anspruch 1 oder 2, wobei die InfoNCE-Kostenfunktion für mindestens eine Rangstufe i=1, ..., r

- eine Summe von Beiträgen, die auf die Positiv-Samples $p_i \in P_i$ dieser Rangstufe i zurückgehen, oder
- einen Logarithmus einer derartigen Summe von Beiträgen,

umfasst.

4. Verfahren (100) nach einem der Ansprüche 1 bis 3, wobei das Ermitteln von Positiv-Samples p und Negativ-Samples n zu mindestens einem Anfrage-Sample q umfasst,

- Samples x zufällig aus der Menge X zu ziehen (161) und
- diese Samples x in Positiv-Samples p, $p_1$, ..., $p_r$, sowie Negativ-Samples n einzuteilen (162).

5. Verfahren (100) nach einem der Ansprüche 1 bis 4, wobei das Ermitteln von Positiv-Samples p zu mindestens einem Anfrage-Sample q umfasst, aus dem Anfrage-Sample q, und/oder aus einem bereits vorhandenen Positiv-Sample p, durch die Anwendung mindestens eines Verarbeitungsschritts, der den semantischen Inhalt dieses Samples nicht ändert, ein neues Positiv-Sample p' zu erzeugen (163),

wobei die Messdaten Bilder sind,
wobei der mindestens eine Verarbeitungsschritt umfasst:

ein Auswählen von Ausschnitten aus den Bildern und anschließend auf die ursprüngliche Bildgröße Zurückvergrößern der ausgewählten Ausschnitte, oder ein Spiegeln der Bilder an einer Achse, oder ein Umwandeln der Farbe der Bilder abhängig von einer vorgegebenen Wahrscheinlichkeit in Graustufen.

6. Verfahren (100) nach einem der Ansprüche 1 bis 5, wobei ein zu mindestens einem vorgegebenen Abfrage-Datensample x' möglichst ähnliches weiteres Datensample x* aus einer vorgegebenen Menge R ermittelt wird, indem

- Datensamples x aus der Menge R mit der trainierten parametrisierten Funktion $f_\theta(x)$ auf Repräsentationen z abgebildet werden (210);
- das Abfrage-Datensample x' ebenfalls mit der trainierten parametrisierten Funktion $f_\theta(x)$ auf eine Repräsen-

tation z' abgebildet wird (220);
• eine im Raum der Repräsentationen am nächsten zu dieser Repräsentation z' gelegene zuvor erzeugte Repräsentation z* ermittelt wird (230); und
• das Datensample x, das ursprünglich auf diese Repräsentation z* abgebildet wurde, als das gesuchte zu dem Abfrage-Datensample x' ähnliche Datensample x* gewertet wird (240).

**7.** Verfahren (100) nach einem der Ansprüche 1 bis 5, wobei

• Datensamples x aus einer Menge R, die verschiedenen Klassen einer vorgegebenen Klassifikation angehören, mit der trainierten parametrisierten Funktion $f_\theta(x)$ auf Repräsentationen z abgebildet werden (410);
• für jede dieser Klassen eine Verteilung $\phi$ der aus Datensamples x dieser Klasse erzeugten Repräsentationen z ermittelt wird (420);
• mindestens ein Abfrage-Datensample x' mit der trainierten parametrisierten Funktion $f_\theta(x)$ auf eine Repräsentation z' abgebildet wird (430);
• anhand der Verteilungen $\phi$ jeweils Wahrscheinlichkeiten (440a) dafür ermittelt werden (440), dass die Repräsentation z' dieser Verteilung $\phi$ angehört; und
• aus diesen Wahrscheinlichkeiten (440a) ausgewertet wird (450), inwieweit das Abfrage-Datensample x' der durch die Menge X von Trainings-Samples x definierten Verteilung V angehört.

**8.** Computerprogramm, enthaltend maschinenlesbare Anweisungen, die, wenn sie von einem oder mehreren Computern ausgeführt werden, den oder die Computer dazu veranlassen, das Verfahren nach einem der Ansprüche 1 bis 7 auszuführen.

**9.** Maschinenlesbarer Datenträger mit dem Computerprogramm nach Anspruch 8.

**10.** Ein oder mehrere Computer mit dem Computerprogramm nach Anspruch 8, und/oder mit dem maschinenlesbaren Datenträger nach Anspruch 9.

## Claims

**1.** Computer-implemented method (100) for training an encoder, wherein the encoder is a parametrized function, $f_\theta(x)$, which maps data samples x of measurement data onto machine-evaluable representations z,

wherein the measurement data are images,
wherein the trained parametrized function $f_\theta(x)$ is configured to map at least one query data sample x' onto a representation z' and wherein this representation z' is supplied (320) to a classifier network K, and wherein one or more classification scores (330a) for the assignment of the query data sample x' to one or more classes of a predefined classification are thereupon determined (330) by the classifier network K,
wherein a control signal (340a) is formed (340) from the classification score(s) (330a), and wherein a vehicle (1), and/or a system (2) for the quality control of series-produced products, and/or a system (3) for the monitoring of areas, are/is controlled (350) with this control signal (340a),
wherein the method for training the encoder has the following steps:

• a set X of training samples x is provided (110), wherein a relation concerning a degree to which two samples $x_1$ and $x_2$ are similar to one another is defined in the context of a predefined application;
• the function $f_\theta(x)$ that is parametrized with trainable parameters $\theta$ and that maps samples x onto representations z is provided (120);
• a similarity measure $h(x_1, x_2)$ is provided (140), which assigns to samples $x_1$ and $x_2$ a similarity of representations $f_\theta(x_1)$ and $f_\theta(x_2)$, and/or of processing products of these representations $f_\theta(x_1)$ and $f_\theta(x_2)$;
• at least one request sample q is drawn (150) from the set X of training samples x;
• with respect to this request sample q the following are determined (160):

  ○ a set P - ordered in a rank order - of positive samples p similar to the request sample q is determined from the set X, wherein the set P comprises subsets $P_1$, ..., $p_r$ of positive samples $p_1$, ..., $p_r$ for ranks 1, ..., r in the rank order, and
  ○ a set N of negative samples n no longer similar to the request sample q is determined from the set X;

9

• at least the parameters $\theta$ are optimized (170) with the aim that the similarity measures h(q, p) are ordered according to the rank order of the positive samples $p \in P$ and are greater than h(q, n) for all $n \in N$, wherein
• a loss function L which is dependent on the parameters $\theta$ and, if appropriate, also $\lambda$ by way of the similarity measures h(q, p) and h(q, n) is established (171), said loss function being a sum of contributions $L_i$ for the ranks 1, ..., r in the rank order; and
• the parameters $\theta$ and, if appropriate, also $\lambda$ are optimized (172) towards the aim of minimizing this loss function L,

wherein for each rank i=1, ..., r an InfoNCE loss function in which

• the positive samples $p_i \in P_i$ of the respective rank i are assessed as positive samples,
• the positive samples $p_j \in P_j$ for ranks j < i are disregarded and
• the positive samples $p_j \in P_j$ for ranks j > i are assessed as negative samples is selected (171a) as a contribution $L_i$ to the loss function L.

2. Method according to Claim 1, wherein

• in addition, a function $g_\lambda(z)$ that is parametrized with trainable parameters $\lambda$ and that converts representations z into a working space is provided (130);
• depictions $g_\lambda(f_\theta(x_1))$ and $g_\lambda(f_\theta(x_2))$ in the working space are formed (141) as processing products of the representations $f_\theta(x_1)$ and $f_\theta(x_2)$;
• the similarity of these depictions $g_\lambda(f_\theta(x_1))$ and $g_\lambda(f_\theta(x_2))$ is evaluated (142) with the similarity measure $h(x_1, x_2)$; and
• in addition to the parameters $\theta$, the parameters $\lambda$ are also optimized (173).

3. Method (100) according to Claim 1 or 2, wherein the InfoNCE loss function for at least one rank i=1, ..., r comprises

• a sum of contributions that originate from the positive samples $p_i \in P_i$ of this rank i, or
• a logarithm of such a sum of contributions.

4. Method (100) according to any of Claims 1 to 3, wherein determining positive samples p and negative samples n with respect to at least one request sample q comprises:

• randomly drawing (161) samples x from the set X and
• dividing (162) these samples x into positive samples p, $p_1$, ..., $p_r$, and negative samples n.

5. Method (100) according to any of Claims 1 to 4, wherein determining positive samples p with respect to at least one request sample q comprises generating (163) a new positive sample p' from the request sample q, and/or from an already existing positive sample p, by applying at least one processing step which does not change the semantic content of this sample,

wherein the measurement data are images,
wherein the at least one processing step comprises:

selecting segments from the images and subsequently enlarging the selected segments back to the original image size, or
mirroring the images on an axis, or
converting the colour of the images into greyscale levels depending on a predefined probability.

6. Method (100) according to any of Claims 1 to 5, wherein a further data sample x* that is as similar as possible to at least one predefined query data sample x' is determined from a predefined set R, by

• mapping (210) data samples x from the set R onto representations z with the trained parametrized function $f_\theta(x)$;
• mapping (220) the query data sample x' onto a representation z' likewise with the trained parametrized function $f_\theta(x)$;
• determining (230) a previously generated representation z* located closest to this representation z' in the space of representations; and
• assessing (240) the data sample x that was originally mapped onto this representation z* as the sought data sample x* similar to the query data sample x'.

7. Method (100) according to any of Claims 1 to 5, wherein

  • data samples x from a set R that belong to different classes of a predefined classification are mapped (410) onto representations z with the trained parametrized function $f_\theta(x)$;

  • for each of these classes, a distribution $\phi$ of the representations z generated from data samples x of this class is determined (420);

  • at least one query data sample x' is mapped (430) onto a representation z' with the trained parametrized function $f_\theta(x)$;

  • on the basis of the distributions $\phi$, respective probabilities (440a) of the representation z' belonging to this distribution $\varphi$ are determined (440); and

  • these probabilities (440a) are used to evaluate (450) the extent to which the query data sample x' belongs to the distribution V defined by the set X of training samples x.

8. Computer program, containing machine-readable instructions which, when executed by one or more computers, cause the computer(s) to carry out the method according to any of Claims 1 to 7.

9. Machine-readable data carrier comprising the computer program according to Claim 8.

10. One or more computers comprising the computer program according to Claim 8 and/or comprising the machine-readable data carrier according to Claim 9.

**Revendications**

1. Procédé mis en œuvre par ordinateur (100) pour entraîner un codeur, le codeur étant une fonction paramétrée, $f_\theta(x)$, qui représente des échantillons de données x de données de mesure sur des représentations z pouvant être évaluées par machine,

  les données de mesure étant des images,
  la fonction paramétrée entraînée $f_\theta(x)$ étant conçue pour représenter au moins un échantillon de données d'interrogation x' sur une représentation z' et cette représentation z' étant acheminée à un réseau de classification K (320), et un ou plusieurs scores de classification (330a) étant ensuite déterminés (330) par le réseau de classification K pour l'affectation de l'échantillon de données d'interrogation x' à une ou plusieurs classes d'une classification prédéfinie,
  un signal de commande (340a) étant formé (340) à partir du ou des scores de classification (330a), et un véhicule (1) et/ou un système (2) pour le contrôle qualité de produits fabriqués en série et/ou un système (3) pour la surveillance de zones étant commandé(s)(350) par ce signal de commande (340a),
  le procédé pour entraîner le codeur comprenant les étapes suivantes :

    • un ensemble X d'échantillons d'entraînement x est fourni (110), une relation étant définie dans le contexte d'une application prédéfinie, laquelle indique dans quelle mesure deux échantillons $x_1$ et $x_2$ sont similaires l'un à l'autre ;
    • la fonction $f_\theta(x)$ paramétrée avec des paramètres $\theta$ pouvant être entraînés est fournie (120), laquelle représente des échantillons x sur des représentations z ;
    • un degré de similarité $h(x_1, x_2)$ est fourni (140), lequel attribue aux échantillons $x_1$ et $x_2$ une similarité des représentations $f_\theta(x_1)$ et $f_\theta(x2)$ et/ou des produits de traitement de ces représentations $f_\theta(x_1)$ et $f_\theta(x_2)$ ;
    • au moins un échantillon d'interrogation q est extrait (150) de l'ensemble X des échantillons d'entraînement x ;
    • pour cet échantillon d'interrogation q, sont déterminés (160)

      ◦ à partir de l'ensemble X, un ensemble P classé par ordre hiérarchique d'échantillons positifs p similaires à l'échantillon d'interrogation q, l'ensemble P comportant des sous-ensembles $P_1$, ..., $P_r$ d'échantillons positifs $p_1$, ..., $p_r$ pour les niveaux de classement 1, ..., r dans l'ordre hiérarchique, ainsi que
      ◦ à partir de l'ensemble X, un ensemble N d'échantillons négatifs n qui ne sont plus similaires à l'échantillon d'interrogation q ;

• au moins les paramètres θ sont optimisés (170) avec pour objectif que les degrés de similarité h(q, p) soient classés conformément à l'ordre hiérarchique des échantillons positifs p ∈ P et soient supérieures à h(q, n) pour tous les n ∈ N,

• une fonction de coût L dépendant des degrés de similarité h(q, p) et h(q, n) des paramètres θ et, le cas échéant, également λ étant établie (171), laquelle est une somme de contributions $L_i$ pour les niveaux de classement 1, ..., r dans l'ordre hiérarchique ; et

• les paramètres θ et, le cas échéant, également λ étant optimisés par rapport à l'objectif (172) de minimiser cette fonction de coût L,

pour chaque niveau de classement i=1, ..., r, une fonction de coût InfoNCE, dans laquelle

• les échantillons positifs $p_i \in P_i$ du niveau de classement i respectif sont évalués comme des échantillons positifs,

• les échantillons positifs $p_j \in P_j$ pour les niveaux de classement j < i ne sont pas pris en compte et

• les échantillons positifs $p_j \in P_j$ pour les niveaux de classement j > i sont évalués comme des échantillons négatifs,

étant sélectionnée (171a) en tant que contribution $L_i$ à la fonction de coût L.

2. Procédé selon la revendication 1,

• une fonction $g_\lambda(z)$ paramétrée avec des paramètres λ pouvant être entraînés, laquelle transfère les représentations z dans un espace de travail, étant en plus fournie (130) ;

• les représentations $g_\lambda(f_\theta(x_1))$ et $g_\lambda(f_\theta(x_2))$ étant formées (141) dans l'espace de travail en tant que produits de traitement des représentations $f_\theta(x_1)$ et $f_\theta(x_2)$ ;

• la similarité entre ces représentations $g_\lambda(f_\theta(x_1))$ et $g_\lambda(f_\theta(x_2))$ étant évaluée (142) avec le degré de similarité $h(x_1, x_2)$ ; et

• les paramètres λ étant également optimisés (173) en plus des paramètres θ.

3. Procédé (100) selon la revendication 1 ou 2, la fonction de coût InfoNCE comportant, pour au moins un niveau de classement i=1, ..., r

• une somme de contributions qui proviennent des échantillons positifs $p_i \in P_i$ de ce niveau de classement i, ou

• un logarithme d'une telle somme de contributions.

4. Procédé (100) selon l'une des revendications 1 à 3, la détermination d'échantillons positifs p et d'échantillons négatifs n pour au moins un échantillon d'interrogation q comprenant,

• l'extraction au hasard (161) d'échantillons x de l'ensemble X et

• la répartition (162) de ces échantillons x en échantillons positifs p, $p_1$, ..., $p_r$, ainsi qu'en échantillons négatifs n.

5. Procédé (100) selon l'une des revendications 1 à 4, la détermination d'échantillons positifs p pour au moins un échantillon d'interrogation q comprenant, à partir de l'échantillon d'interrogation q et/ou à partir d'un échantillon positif p déjà présent, par l'application d'au moins une étape de traitement qui ne modifie pas le contenu sémantique de cet échantillon, la génération (163) d'un nouvel échantillon positif p',

les données de mesure étant des images,
l'au moins une étape de traitement comprenant :

une sélection de portions des images et ensuite un nouvel agrandissement des portions sélectionnés à la taille d'image originale, ou
une réflexion des images sur un axe, ou
une conversion des couleurs des images en niveaux de gris en fonction d'une probabilité prédéfinie.

6. Procédé (100) selon l'une des revendications 1 à 5, un échantillon de données supplémentaire x* aussi similaire que possible à au moins un échantillon de données d'interrogation prédéfini x' étant déterminé à partir d'un ensemble prédéfini R, en ce que

• les échantillons de données x issus de l'ensemble R sont représentés (210) sur des représentations z avec la fonction paramétrée $f_\theta(x)$ entraînée ;

• l'échantillon de données d'interrogation x' est également représenté (220) sur une représentation z' avec la fonction paramétrée $f_\theta(x)$ entraînée ;

• une représentation z* générée précédemment, la plus proche de cette représentation z' dans l'espace des représentations, est déterminée (230) ; et

• l'échantillon de données x, qui a été initialement représenté sur cette représentation z*, est évalué (240) comme étant l'échantillon de données x* similaire à l'échantillon de données d'interrogation x' recherché.

**7.** Procédé (100) selon l'une des revendications 1 à 5,

• les échantillons de données x issus d'un ensemble R, qui appartiennent à différentes classes d'une classification prédéfinie, étant représentés (410) sur des représentations z avec la fonction paramétrée $f_\theta(x)$ entraînée ;

• pour chacune de ces classes, une distribution $\phi$ des représentations z générées à partir d'échantillons de données x de cette classe étant déterminée (420) ;

• au moins un échantillon de données d'interrogation x' étant représenté (430) sur une représentation z' avec la fonction paramétrée $f_\theta(x)$ entraînée ;

• à l'aide des distributions $\phi$, des probabilités (440a) que la représentation z' appartienne à cette distribution $\varphi$ étant respectivement déterminées (440) ; et

• une évaluation étant effectuée (450) à partir de ces probabilités (440a), afin de déterminer dans quelle mesure l'échantillon de données d'interrogation x' appartient à la distribution V définie par l'ensemble X d'échantillons d'entraînement x.

**8.** Programme informatique, comprenant des instructions lisibles par machine qui, lorsqu'elles sont exécutées par un ou plusieurs ordinateurs, amènent le ou les ordinateurs à mettre en œuvre le procédé selon l'une des revendications 1 à 7.

**9.** Support de données lisible par machine, contenant le programme informatique selon la revendication 8.

**10.** Un ou plusieurs ordinateurs, comprenant le programme informatique selon la revendication 8 et/ou le support de données lisible par machine selon la revendication 9.

**100**

Fig. 1b     Fig. 1c     Fig. 1d

**Fig. 1a**

**Fig. 1a**

$x \in R$  $\theta^*, \lambda^*, f_\theta(x)$

210

z

x'

220

z'

230

z*

240

x*

**Fig. 1b**

**Fig. 1a**

x'

$\theta^*, \lambda^*, f_\theta(x)$

310

z'

320

z'

K

330

330a

340

340a

350

340a

**1,2,3**

**Fig. 1c**

## Fig. 1a

$x \in R$

$\theta^*, \lambda^*, f_\theta(x)$

410

z

420

x'

$\phi$

430

z'

440

440a

450

$x' \in V$         $x' \notin V$

## Fig. 1d

Fig. 2b

Fig. 2a

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3575986 A1

**In der Beschreibung aufgeführte Nicht-Patentliteratur**

- Ranked List Loss for Deep Metric Learning. **WANG XINSHAO et al.** 2019 IEEE/CVF CONFERENCE ON COMPUTER VISION AND PATTERN RECOGNITION (CVPR). IEEE